# EUROPEAN PATENT APPLICATION

(11) **EP 2 843 389 A1**
(43) Date of publication of application: **04.03.2015**
(21) Application number: 12874947.0
(22) Date of filing: 08.05.2012
(51) Int. Cl.: G01N 3/18, G01N 3/32, A61J 1/14

(54) **METHOD FOR TESTING LIFTING RING USED AS PLASTIC INFUSION VESSEL**

(30) Priority: 25.04.2012 CN 201210124264
(71) Applicant: Sichuan Kelun Pharmaceutical Co., Ltd, Chengdu, Sichuan 610500 (CN)
(72) Inventor: DENG, Maolin, Chengdu Sichuan 610500 (CN); TAN, Hongbo, Chengdu Sichuan 610500 (CN); ZHU, ZhongQiang, Chengdu Sichuan 610500 (CN)
(74) Representative: Gulde & Partner
(86) International application number: PCT/CN2012/075216
(87) International publication number: WO 2013/159391

(57) **Abstract**

The present invention discloses a test method for suspension rings used for a plastic infusion container, which comprises four steps of routine test, accelerated ageing test, thermal adaptability test, and melt flow rate test. The present invention provides a test method for suspension rings used for a plastic infusion container, which solves such problems as shortage of a complete test method for suspension rings used for a plastic infusion container at present, injects a new strength to the plastic infusion container in the pharmaceuticals industry, provides an effective means for finding the problems or defects of the suspension ring used for a plastic infusion container on such aspects as design, material and process, provides a basis for identifying the performances of the suspension rings used for a plastic infusion container, ensures that the suspension rings used for a plastic infusion container are only used after the performances thereof are identified, and ensures that the quality of the suspension rings used for a plastic infusion container meets requirements, so that the probability of occurrence of a medical accident is minimized.

## Description

### Technical Field

The invention relates to a test method for suspension rings used for a plastic infusion container.

### Background Art

With the development of infusion varieties in the pharmaceuticals industry, infusion packaging container materials are gradually developed to plastic infusion containers. A suspension ring used for a plastic infusion container is one of necessary devices matched with the infusion container. Because there is no test method for the suspension ring used for a plastic transfusion container, the suspension rings after being produced are mostly and directly flowed into the market and used only through a simple test, which cannot ensure that such situations as compressional deformation and the like do not occur to the suspension rings during transportation. Those suspension rings which are not strictly tested are easily subjected to such bad phenomena as suspension ring fracture and the like while being used, which cause unnecessary medical accidents and reduces the credibility of the sufferer on the medical institutions. The existing suspension rings used for a plastic transfusion container may possibly have various problems or defects on the aspects of design, material and process. These problems cannot be timely and effectively find these problems via the prior art, but can be only found during the usage process. Usually a painful cost is paid simultaneously when the problems are found.

### Summary of the Invention

The objective of the present invention is to overcome the defects of the prior art and provide a test method for suspension rings used for a plastic infusion container, which solves such problems as shortage of a complete test method for suspension rings used for a plastic infusion container at present, provides an effective means for finding the problems or defects of the suspension ring used for a plastic transfusion container on such aspects as design, material and process, provides a basis for identifying the performances of the suspension rings used for a plastic infusion container, ensures the quality of the plastic infusion container, and ensures that the suspension rings used for a plastic infusion container are only used after the performances thereof are identified, so that the probability of occurrence of a medical accident is minimized.

In order to achieve the above objectives, the present invention is emboded by the follow technical solution: A test method for suspension rings used for a plastic infusion container, comprising four steps of routine test, accelerated ageing test, thermal adaptability test and melt flow rate test, wherein the routine test comprises four sub-steps of sample treatment, bending fatigue resistance test, suspension force test and tensile strength test, wherein:
S11: sample treatment: randomly taking 40 ∼ 80 suspension rings to be tested, disposing the suspension rings in a high pressure steam sterilizer having a temperature of 110 ∼ 130°C, after maintaining for 30 ∼ 60 minutes, taking the suspension rings out, standing the suspension rings to a room temperature, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S12: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S13: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S14: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;

The accelerated ageing test comprises the following four sub-steps of sample treatment, bending fatigue resistance test, suspension force test and tensile strength test, wherein:
S21: sample treatment: randomly taking 40 ∼ 80 suspension rings to be tested, disposing the suspension rings in a high pressure steam sterilizer having a temperature of 110 ∼ 130°C, after maintaining for 30 ∼ 60 minutes, taking the suspension rings out, standing the suspension rings to a room temperature, stringing the suspension rings to be tested with metal wires, dispersedly disposing the suspension rings in a drying oven, starting the drying oven and warming up to 120 ∼ 180°C; after 2 ∼ 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S22: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S23: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S24: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;

The thermal adaptability test comprises the following four sub-steps of sample treatment, bending fatigue resistance test, suspension force test and tensile strength test;
S31: sample treatment: randomly taking 40 - 80 suspension rings to be tested, firstly disposing the suspension rings in a high pressure steam sterilizer having a temperature of 110 ∼ 130°C, after maintaining for 30 ∼ 60 minutes, taking the suspension rings out, standing the suspension rings to a room temperature, and secondly standing the suspension rings for 20 ∼ 28 hours under a condition of -27 ∼ -23 °C, then standing the suspension rings for 20 ∼ 28 hours under a condition of 48 ∼ 52 °C, and finally standing the suspension rings for 20 ∼ 28 hours under a condition of 21 ∼ 25 °C;
S32: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S33: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S34: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;
   the melt flow rate test comprises the following sub-step of sample treatment;
   sample treatment: randomly taking 10 ∼ 30 suspension rings to be tested, disposing the suspension rings in a high pressure steam sterilizer having a temperature of 110 - 130 °C, after maintaining for 30 - 60 minutes, taking the suspension rings out, standing the suspension rings to a room temperature, stringing the suspension rings to be tested with metal wires, dispersedly disposing the suspension rings in a drying oven, starting the drying oven and warming up to 120 - 180 °C; after 2 ∼ 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, testing the melt flow rate, and considering the suspension rings as qualified if the tested melt flow rate ranges from 3.0 to 7.5g/10min;

The test method for suspension rings used for a plastic infusion container further comprises an appearance inspection step, wherein the appearance inspection comprises the sub-steps as follows:
S41: visually observing the suspension rings in a bright place, wherein the suspension rings shall be white or off-white without apparent white spots due to inadequate raw material fusing, and the entire suspension rings shall not have bubbles that affect the usage;
S42: the appearance shall be flat and smooth without burrs, trimmings and macroscopic foreign matters; and
S43: each part shall not have injuries that affect the usage or cause fracture.

The test method for suspension rings used for a plastic infusion container further comprises a step of package, storage and transportation.

The present invention has the advantageous effects that: the present invention provides a test method for suspension rings used for a plastic infusion container, which solves such problems as shortage of a complete test method for suspension rings used for a plastic infusion container at present, injects a new strength to the plastic infusion container in the pharmaceuticals industry, provides an effective means for finding the problems or defects of the suspension rings used for a plastic infusion container on such aspects as design, material and process, provides a basis for identifying the performances of the suspension rings used for a plastic infusion container, ensures the quality of the plastic infusion container, and ensures that the suspension rings used for a plastic infusion container are only used after the performances thereof are identified, so that the probability of occurrence of a medical accident is minimized.

### Detailed Description of the Embodiments

The present invention will be further described hereinafter by reference to the embodiments; however, the protection scope of the present invention is not limited to the following descriptions.

### Embodiment 1

A test method for suspension rings used for a plastic infusion container, comprising four steps of routine test, accelerated ageing test, thermal adaptability test and melt flow rate test, wherein the routine test comprises four sub-steps of sample treatment, bending fatigue resistance test, suspension force test and tensile strength test, wherein:
S11: sample treatment: randomly taking 60 suspension rings to be tested, disposing the suspension rings in a high pressure steam sterilizer having a temperature of 121 °C, after maintaining for 45 minutes, taking the suspension rings out, standing the suspension rings to a room temperature, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S12: bending fatigue resistance test: randomly taking 40 suspension rings to be tested qualified after the sample treatment, flipping the suspension ring back and forth by 90 degrees from the left side to the right side for 5 times, and considering the suspension rings qualified if no cracks appear;
S13: suspension force test: randomly taking 20 suspension rings qualified after the fatigue bending resistance test, suspending a heavy substance having the same weight as that of the working condition on the suspension rings for 4 hours, and considering the suspension rings qualified if no fractures appear; specification and load capacity of a loading infusion bottle are as shown in Table 1 below:
   Table 1 Comparison table of specification and load capacity of the loading infusion bottle
S14: tensile strength test: randomly taking 20 suspension rings qualified after the fatigue bending resistance test, testing the loads of breaking points of the suspension rings at a speed of 200mm/min, and considering the suspension rings qualified if the loads of the breaking points meet the requirements; Specification and load of a breaking point of the loading infusion bottle are as shown in Table 2 below:
   Table 2 Comparison table of specification and load of the breaking point of the loading infusion bottle

The accelerated ageing test is based on the hypothesis of the Arrhenius accelerated aging principle, i.e. the chemical reaction included during the ageing of the materials follows the Arrhenius reaction rate function. This function states that the rate of the chemical reaction thereof may be doubled or halved when the temperature of the same process is increased or decreased by every 10 °C. The accelerated ageing test comprises the following four sub-steps of sample treatment, bending fatigue resistance test, suspension force test and tensile strength test, wherein:
S21: sample treatment: randomly taking 60 suspension rings to be tested, disposing the suspension rings in a high pressure steam sterilizer having a temperature of 121 °C, after maintaining for 45 minutes, taking the suspension rings out, standing the suspension rings to a room temperature, stringing the suspension rings to be tested with metal wires, dispersedly disposing the suspension rings in a drying oven, starting the drying oven and warming up to 150 °C ; after 3 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S22: bending fatigue resistance test: randomly taking 40 suspension rings to be tested qualified after the sample treatment, flipping the suspension ring back and forth by 90 degrees from the left side to the right side for 5 times, and considering the suspension rings qualified if no cracks appear;
S23: suspension force test: randomly taking 20 suspension rings qualified after the fatigue bending resistance test, suspending a heavy substance having the same weight as that of the working condition on the suspension rings for 4 hours, and considering the suspension rings qualified if no fractures appear; specification and load capacity of a loading infusion bottle are as shown in Table 1 above.
S24: tensile strength test: randomly taking 20 suspension rings qualified after the fatigue bending resistance test, testing the loads of breaking points of the suspension rings at a speed of 200mm/min, and considering the suspension rings qualified if the loads of the breaking points meet the requirements; specification and load of a breaking point of a loading infusion bottle are as shown in Table 3 below:
Table 3 Comparison table of specification and load of the breaking point of the loading infusion bottle

The thermal adaptability test comprises the following four sub-steps of sample treatment, bending fatigue resistance test, suspension force test and tensile strength test;
S31: sample treatment: randomly taking 60 suspension rings to be tested, firstly disposing the suspension rings in a high pressure steam sterilizer having a temperature of 121°C, after maintaining for 45 minutes, taking the suspension rings out, standing the suspension rings to a room temperature, and secondly standing the suspension rings for 24 hours under a condition of -25 °C, then standing the suspension rings for 24 hours under a condition of 50 °C, and finally standing the suspension rings for 24 hours under a condition of 23 °C;
S32: bending fatigue resistance test: randomly taking 40 suspension rings to be tested qualified after the sample treatment, flipping the suspension ring back and forth by 90 degrees from the left side to the right side for 5 times, and considering the suspension rings qualified if no cracks appear;
S33: suspension force test: randomly taking 20 suspension rings qualified after the fatigue bending resistance test, suspending a heavy substance having the same weight as that of the working condition on the suspension rings for 4 hours, and considering the suspension rings qualified if no fractures appear; and
S34: tensile strength test: randomly taking 20 suspension rings qualified after the fatigue bending resistance test, testing the loads of breaking points of the suspension rings at a speed of 200mm/min, and considering the suspension rings qualified if the loads of the breaking points meet the requirements;
   the melt flow rate test comprises the following sub-step of sample treatment;
   sample treatment: randomly taking 20 suspension rings to be tested, disposing the suspension rings in a high pressure steam sterilizer having a temperature of 121 °C, after maintaining for 45 minutes, taking the suspension rings out, standing the suspension rings to a room temperature, stringing the suspension rings to be tested with metal wires, dispersedly disposing the suspension rings in a drying oven, starting the drying oven and warming up to 150 °C; after 3 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, carrying out a melt flow rate test according to Working Specification for Thermoplastic Melt Flow Rate Test C08-0153 and considering the suspension rings qualified if the tested melt flow rate is 5g/10min.

The test method for suspension rings used for a plastic infusion container further comprises an appearance inspection step, wherein the appearance inspection comprises the sub-steps as follows:
S41: visually observing the suspension rings in a bright place, wherein the suspension rings shall be white or off-white without apparent white spots due to inadequate raw material fusing, and the entire suspension rings shall not have bubbles that affect the usage;
S42: the appearance shall be flat and smooth without burrs, trimmings and macroscopic foreign matters; and
S43: each part shall not have injuries that affect the usage or cause fracture.

The test method for suspension rings used for a plastic infusion container further comprising the steps of package, storage and transportation.
(1) Package: a paper-plastic compound bag (or package having the same packing effect) with a plastic bag internally lined is used, wherein the seal of the packing bag shall be not polluted during transportation and storage, can prevent dust, resist mositure and can prevent contact of copper or copper-containing substances.
(2) Transportation: during the transportation, the package shall be prevented from solarization and rain; moreover, the package shall be complete without defacement.
(3) Storage: during the storage process, the product shall be prevented from water, acid, base, oils and organic solvent and the like. The product shall be stored in a storehouse having a temperature of 0 °C ∼ 40 °C and a relative humidity of 30% ∼ 80%, and shall be 1m away from a source of heat.

Test rules for the test method for suspension rings used for a plastic infusion container are as follows.
1. Sampling rule: set the total number of pieces as N, when N is no more than 3, sample each piece; when N is more than 3 but no more than 300, sample N1/2+1 pieces; and when N is more than 300, sample N1/2/2+1 pieces. For polypropylene infusion bottle suspension rings, when the lot representative volume is below 500,000, the appearance sampling quantity is 315; when the lot representative volume is more than 500,000, the appearance sampling quantity is 500; when routine test items need to be carried out only, the sampling quantity is 60; when all-item test needs to be carried out, the sampling quantity is 200.
2. The test includes all-item test and partial-item test. The all-item test shall be carried out according to the requirements of the standard in case one of the following situations occurs:
   (1) the raw material supplier is changed;
   (2) re-production after a major quality accident occurred during production;
   (3) selective test for one batch in every half year;
   (4) after normal production, items excluding "*" can be carried out according to the requirements of the standard in case that the raw material supply area and production process and the like are not modified; and
   (5) re-test of the all the items shall be carried out when the storage time exceeds half year.

### Embodiment 2:

A test method for suspension rings used for a plastic infusion container, comprising four steps of routine test, accelerated ageing test, thermal adaptability test and melt flow rate test, wherein the routine test comprises four sub-steps of sample treatment, bending fatigue resistance test, suspension force test and tensile strength test, wherein:
S11: sample treatment: randomly taking 40 suspension rings to be tested, disposing the suspension rings in a high pressure steam sterilizer having a temperature of 110°C, after maintaining for 30 minutes, taking the suspension rings out, standing the suspension rings to a room temperature, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S12: bending fatigue resistance test: randomly taking 20 suspension rings to be tested qualified after the sample treatment, flipping the suspension ring back and forth by 120 degrees from the left side to the right side for 3 times, and considering the suspension rings qualified if no cracks appear;
S13: suspension force test: randomly taking 10 suspension rings qualified after the fatigue bending resistance test, suspending a heavy substance having the same weight as that of the working condition on the suspension rings for 5 hours, and considering the suspension rings qualified if no fractures appear; specification and load capacity of a loading infusion bottle are as shown in Table 1 of Embodiment 1;
S14: tensile strength test: randomly taking 10 suspension rings qualified after the fatigue bending resistance test, testing the loads of breaking points of the suspension rings at a speed of 180mm/min, and considering the suspension rings qualified if the loads of the breaking points meet the requirements; Specification and load of a breaking point of the loading infusion bottle are as shown in Table 2 of Embodiment 1;

The accelerated ageing test is based on the hypothesis of the Arrhenius accelerated aging principle, i.e. the chemical reaction included during the ageing of the materials follows the Arrhenius reaction rate function. This function states that the rate of the chemical reaction thereof may be doubled or halved when the temperature of the same process is increased or decreased by every 10 °C. The accelerated ageing test comprises the following four sub-steps of sample treatment, bending fatigue resistance test, suspension force test and tensile strength test, wherein:
S21: sample treatment: randomly taking 40 suspension rings to be tested, disposing the suspension rings in a high pressure steam sterilizer having a temperature of 110°C, after maintaining for 30 minutes, taking the suspension rings out, standing the suspension rings to a room temperature, stringing the suspension rings to be tested with metal wires, dispersedly disposing the suspension rings in a drying oven, starting the drying oven and warming up to 120 °C; after 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S22: bending fatigue resistance test: randomly taking 20 suspension rings to be tested qualified after the sample treatment, flipping the suspension ring back and forth by 120 degrees from the left side to the right side for 3 times, and considering the suspension rings qualified if no cracks appear;
S23: suspension force test: randomly taking 10 suspension rings qualified after the fatigue bending resistance test, suspending a heavy substance having the same weight as that of the working condition on the suspension rings for 5 hours, and considering the suspension rings qualified if no fractures appear; specification and load capacity of a loading infusion bottle are as shown in Table 1 of Embodiment 1;
S24: tensile strength test: randomly taking 20 suspension rings qualified after the fatigue bending resistance test, testing the loads of breaking points of the suspension rings at a speed of 200mm/min, and considering the suspension rings qualified if the loads of the breaking points meet the requirements; specification and load of a breaking point of a loading infusion bottle are as shown in Table 3 of Embodiment 1;

The thermal adaptability test comprises the following four sub-steps of sample treatment, bending fatigue resistance test, suspension force test and tensile strength test:
S31: sample treatment: randomly taking 40 suspension rings to be tested, firstly disposing the suspension rings in a high pressure steam sterilizer having a temperature of 110 °C, after maintaining for 30 minutes, taking the suspension rings out, standing the suspension rings to a room temperature, and secondly standing the suspension rings for 28 hours under a condition of -27 °C, then standing the suspension rings for 20 hours under a condition of 48 °C, and finally standing the suspension rings for 28 hours under a condition of 21 °C;
S32: bending fatigue resistance test: randomly taking 20 suspension rings to be tested qualified after the sample treatment, flipping the suspension ring back and forth by 120 degrees from the left side to the right side for 3 times, and considering the suspension rings qualified if no cracks appear;
S33: suspension force test: randomly taking 10 suspension rings qualified after the fatigue bending resistance test, suspending a heavy substance having the same weight as that of the working condition on the suspension rings for 3 hours, and considering the suspension rings qualified if no fractures appear; and
S34: tensile strength test: randomly taking 10 suspension rings qualified after the fatigue bending resistance test, testing the loads of breaking points of the suspension rings at a speed of 180mm/min, and considering the suspension rings qualified if the loads of the breaking points meet the requirements;
   the melt flow rate test comprises the following sub-step of sample treatment;
   sample treatment: randomly taking 30 suspension rings to be tested, disposing the suspension rings in a high pressure steam sterilizer having a temperature of 130 °C, after maintaining for 60 minutes, taking the suspension rings out, standing the suspension rings to a room temperature, stringing the suspension rings to be tested with metal wires, dispersedly disposing the suspension rings in a drying oven, starting the drying oven and warming up to 180 °C; after 2 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, carrying out a melt flow rate test according to Working Specification for Thermoplastic Melt Flow Rate Test C08-0153, and considering the suspension rings qualified if the tested melt flow rate is 3.0g/10min.

The test method for suspension rings used for a plastic infusion container further comprises a step of appearance inspection, wherein the appearance inspection is same as that of embodiment 1.

The test method for suspension rings used for a plastic infusion container further comprises a step of package, storage and transportation, wherein the test rules for the package, storage and transportation are same as that of embodiment 1.

### Embodiment 3:

A test method for suspension rings used for a plastic infusion container, comprising four steps of routine test, accelerated ageing test, thermal adaptability test and melt flow rate test, wherein the routine test comprises four sub-steps of sample treatment, bending fatigue resistance test, suspension force test and tensile strength test, wherein:
S11: sample treatment: randomly taking 80 suspension rings to be tested, disposing the suspension rings in a high pressure steam sterilizer having a temperature of 130°C, after maintaining for 60 minutes, taking the suspension rings out, standing the suspension rings to a room temperature, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S12: bending fatigue resistance test: randomly taking 60 suspension rings to be tested qualified after the sample treatment, flipping the suspension ring back and forth by 60 degrees from the left side to the right side for 7 times, and considering the suspension rings qualified if no cracks appear;
S13: suspension force test: randomly taking 30 suspension rings qualified after the fatigue bending resistance test, suspending a heavy substance having the same weight as that of the working condition on the suspension rings for 3 hours, and considering the suspension rings qualified if no fractures appear; specification and load capacity of a loading infusion bottle are as shown in Table 1 of Embodiment 1;
S14: tensile strength test: randomly taking 30 suspension rings qualified after the fatigue bending resistance test, testing the loads of breaking points of the suspension rings at a speed of 220mm/min, and considering the suspension rings qualified if the loads of the breaking points meet the requirements; Specification and load of a breaking point of the loading infusion bottle are as shown in Table 2 of Embodiment 1;

The accelerated ageing test is based on the hypothesis of the Arrhenius accelerated aging principle, i.e. the chemical reaction included during the ageing of the materials follows the Arrhenius reaction rate function. This function states that the rate of the chemical reaction thereof may be doubled or halved when the temperature of the same process is increased or decreased by every 10 °C. The accelerated ageing test comprises the following four sub-steps of sample treatment, bending fatigue resistance test, suspension force test and tensile strength test, wherein:
S21: sample treatment: randomly taking 80 suspension rings to be tested, disposing the suspension rings in a high pressure steam sterilizer having a temperature of 130°C, after maintaining for 60 minutes, taking the suspension rings out, standing the suspension rings to a room temperature, stringing the suspension rings to be tested with metal wires, dispersedly disposing the suspension rings in a drying oven, starting the drying oven and warming up to 180 °C; after 2 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S22: bending fatigue resistance test: randomly taking 60 suspension rings to be tested qualified after the sample treatment, flipping the suspension ring back and forth by 60 degrees from the left side to the right side for 7 times, and considering the suspension rings qualified if no cracks appear;
S23: suspension force test: randomly taking 30 suspension rings qualified after the fatigue bending resistance test, suspending a heavy substance having the same weight as that of the working condition on the suspension rings for 3 hours, and considering the suspension rings qualified if no fractures appear; specification and load capacity of a loading infusion bottle are as shown in Table 1 of Embodiment 1;
S24: tensile strength test: randomly taking 30 suspension rings qualified after the fatigue bending resistance test, testing the loads of breaking points of the suspension rings at a speed of 180mm/min, and considering the suspension rings qualified if the loads of the breaking points meet the requirements; specification and load of a breaking point of a loading infusion bottle are as shown in Table 3 of Embodiment 1;

The thermal adaptability test comprises the following four sub-steps of sample treatment, bending fatigue resistance test, suspension force test and tensile strength test:
S31: sample treatment: randomly taking 80 suspension rings to be tested, firstly disposing the suspension rings in a high pressure steam sterilizer having a temperature of 130 °C, after maintaining for 60 minutes, taking the suspension rings out, standing the suspension rings to a room temperature, and secondly standing the suspension rings for 20 hours under a condition of -23 °C, then standing the suspension rings for 28 hours under a condition of 52 °C, and finally standing the suspension rings for 20 hours under a condition of 25 °C;
S32: bending fatigue resistance test: randomly taking 60 suspension rings to be tested qualified after the sample treatment, flipping the suspension ring back and forth by 60 degrees from the left side to the right side for 7 times, and considering the suspension rings qualified if no cracks appear;
S33: suspension force test: randomly taking 30 suspension rings qualified after the fatigue bending resistance test, suspending a heavy substance having the same weight as that of the working condition on the suspension rings for 5 hours, and considering the suspension rings qualified if no fractures appear; and
S34: tensile strength test: randomly taking 30 suspension rings qualified after the fatigue bending resistance test, testing the loads of breaking points of the suspension rings at a speed of 220mm/min, and considering the suspension rings qualified if the loads of the breaking points meet the requirements;
   the melt flow rate test comprises the following sub-step of sample treatment;
   sample treatment: randomly taking 10 suspension rings to be tested, disposing the suspension rings in a high pressure steam sterilizer having a temperature of 110 °C, after maintaining for 30 minutes, taking the suspension rings out, standing the suspension rings to a room temperature, stringing the suspension rings to be tested with metal wires, dispersedly disposing the suspension rings in a drying oven, starting the drying oven and warming up to 120 °C; after 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, carrying out a melt flow rate test according to Working Specification for Thermoplastic Melt Flow Rate Test C08-0153, and considering the suspension rings qualified if the tested melt flow rate is 7.5g/10min.

The test method for suspension rings used for a plastic infusion container further comprises an appearance inspection step, wherein the appearance inspection is same as that of embodiment 1.

The test method for suspension rings used for a plastic infusion container further comprises a step of package, storage and transportation, wherein the test rules for the package, storage and transportation are same as that of embodiment 1.

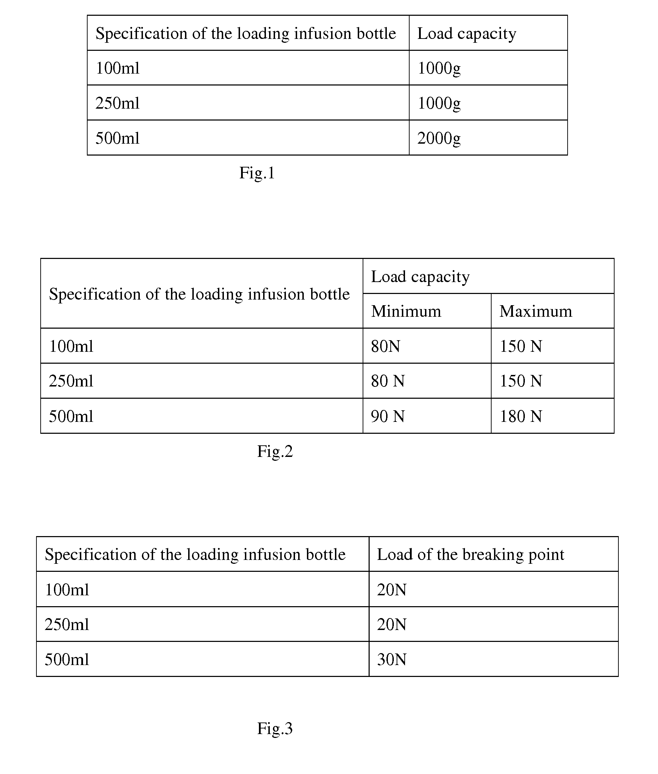

## Claims

1. A test method for suspension rings used for a plastic infusion container, **characterized by** comprising four steps of routine test, accelerated ageing test, thermal adaptability test and melt flow rate test, wherein the routine test comprises four sub-steps of sample treatment, bending fatigue resistance test, suspension force test and tensile strength test, wherein:
S11: sample treatment: randomly taking 40 ∼ 80 suspension rings to be tested, disposing the suspension rings in a high pressure steam sterilizer having a temperature of 110 ∼ 130°C, after maintaining for 30 ∼ 60 minutes, taking the suspension rings out, standing the suspension rings to a room temperature, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S12: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S13: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S14: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;
wherein the accelerated ageing test comprises the following four sub-steps of sample treatment, bending fatigue resistance test, suspension force test and tensile strength test, wherein:
S21: sample treatment: randomly taking 40 - 80 suspension rings to be tested, disposing the suspension rings in a high pressure steam sterilizer having a temperature of 110 ∼ 130°C, after maintaining for 30 ∼ 60 minutes, taking the suspension rings out, standing the suspension rings to a room temperature, stringing the suspension rings to be tested with metal wires, dispersedly disposing the suspension rings in a drying oven, starting the drying oven and warming up to 120 ∼ 180°C; after 2 ∼ 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, then carrying out next step to perform the bending fatigue resistance test;
S22: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S23: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S24: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;
wherein the thermal adaptability test comprises the following four sub-steps of sample treatment, bending fatigue resistance test, suspension force test and tensile strength test;
S31: sample treatment: randomly taking 40 - 80 suspension rings to be tested, firstly disposing the suspension rings in a high pressure steam sterilizer having a temperature of 110 - 130°C, after maintaining for 30 - 60 minutes, taking the suspension rings out, standing the suspension rings to a room temperature, and secondly standing the suspension rings for 20 ∼ 28 hours under a condition of -27 ∼ -23 °C, then standing the suspension rings for 20 ∼ 28 hours under a condition of 48 - 52 °C, and finally standing the suspension rings for 20 ∼ 28 hours under a condition of 21 ∼ 25 °C;
S32: bending fatigue resistance test: randomly taking 20 ∼ 60 suspension rings to be tested qualified after the sample treatment, flipping the suspension ring back and forth by 60- 120 degrees from the left side to the right side for 3 ∼ 7 times, and considering the suspension rings qualified if no cracks appear;
S33: suspension force test: randomly taking 10 ∼ 30 suspension rings qualified after the fatigue bending resistance test, suspending a heavy substance having the same weight as that of the working condition on the suspension rings for 3 ∼ 5 hours, and considering the suspension rings qualified if no fractures appear; and
S34: tensile strength test: randomly taking 10 - 30 suspension rings qualified after the fatigue bending resistance test, testing the loads of breaking points of the suspension rings at a speed of 180 - 220mm/min, and considering the suspension rings qualified if the loads of the breaking points meet the requirements;
the melt flow rate test comprises the following sub-step of sample treatment;
sample treatment: randomly taking 10 ∼ 30 suspension rings to be tested, disposing the suspension rings in a high pressure steam sterilizer having a temperature of 110 - 130 °C, after maintaining for 30 - 60 minutes, taking the suspension rings out, standing the suspension rings to a room temperature, stringing the suspension rings to be tested with metal wires, dispersedly disposing the suspension rings in a drying oven, starting the drying oven and warming up to 120 - 180 °C; after 2 ∼ 4 hours, taking the samples out, visually observing the suspension rings in a bright place and observing whether an apparent change of modification or discoloration occurs to the appearance of the suspension rings; if yes, considering the suspension rings as unqualified and directly rejecting the suspension rings; if not, testing the melt flow rate, and considering the suspension rings as qualified if the tested melt flow rate ranges from 3.0 to 7.5g/10min.

2. The test method for suspension rings used for a plastic infusion container according to claim 1, **characterized by** further comprising an appearance inspection step, wherein the appearance inspection comprises the sub-steps as follows:
S41: visually observing the suspension rings in a bright place, wherein the suspension rings shall be white or off-white without apparent white spots due to inadequate raw material fusing, and the entire suspension rings shall not have bubbles that affect the usage;
S42: the appearance shall be flat and smooth without burrs, trimmings and macroscopic foreign matters; and
S43: each part shall not have injuries that affect the usage or cause fracture.

3. The test method for suspension rings used for a plastic infusion container according to claim 1, **characterized by** further comprising a step of package, storage and transportation.
